**Europäisches Patentamt**

**European Patent Office**

**Office européen des brevets**

(19)

(11) Veröffentlichungsnummer : **0 165 207**
**B1**

(12)

# EUROPÄISCHE PATENTSCHRIFT

(45) Veröffentlichungstag der Patentschrift :
**02.03.88**

(21) Anmeldenummer : **85810212.2**

(22) Anmeldetag : **06.05.85**

(51) Int. Cl.⁴ : **C 09 D   3/58**, C 09 D   3/66,
**C 09 D   5/03**

(54) **Pulverlacke für die Herstellung matter Ueberzüge.**

(30) Priorität : **11.05.84 CH 2338/84**

(43) Veröffentlichungstag der Anmeldung :
**18.12.85 Patentblatt 85/51**

(45) Bekanntmachung des Hinweises auf die Patenterteilung : **02.03.88 Patentblatt 88/09**

(84) Benannte Vertragsstaaten :
**BE CH DE FR GB IT LI NL**

(56) Entgegenhaltungen :
**DE-A- 2 713 550**
**FR-A- 2 255 341**
**FR-A- 2 365 614**
**US-A- 3 872 040**
**US-A- 3 883 363**
**US-A- 4 242 253**
**CHEMICAL ABSTRACTS, Band 90, Nr. 2, Januar 1979,**
**Seite 75, Nr. 7719h, Columbus, Ohio, US ; & JP - A - 78**
**92 845 (NIPPON PAINT CO., LTD.) 15-08-1978**

(73) Patentinhaber : **CIBA-GEIGY AG**
**Klybeckstrasse 141**
**CH-4002 Basel (CH)**

(72) Erfinder : **Lauterbach, Horst, Dr.**
**Im Mühleboden 78**
**CH-4106 Therwil (CH)**

# 0 165 207

**Beschreibung**

Die vorliegende Erfindung betrifft Pulverlacke auf der Basis von Epoxidharz und Polyester enthaltend Wachse oder wachsartige Substanzen in Kombination mit Metallverbindungen als Mattierungsmittel, sowie deren Verwendung zur Herstellung matter Ueberzüge.

Die Herstellung von homogenen, dünnen Ueberzügen aus pulverförmigen Beschichtungsmitteln auf der Basis von Epoxidharzen ist bekannt und wird aus Umweltschutz- sowie aus wirtschaftlichen Gründen gegenüber der Anwendung von lösungsmittelhaltigen Ueberzügen immer mehr bevorzugt. Als Härtungsmittel für das Epoxidharz können dabei z. B. mehrere Carboxylgruppen enthaltende Verbindungen, wie Polycarbonsäuren, oder Polyester mit endständigen Carboxylgruppen, verwendet werden. Solche Pulverlacke sind z. B. in den DE-OS 28 38 841, DE-OS 21 63 962 und in der US-PS 3,397,254 beschrieben.

Die US-PS 4 242 253 beschreibt Polyester/Epoxidharz Pulverlacke, welche als Mattierungsmittel, bezogen auf die Gesamtmasse, 30 bis 55 Gew.% Calciumcarbonat und 0,9 bis 10 Gew.% feinverteilter Polypropylenteilchen enthalten. Ein Teil des verwendeten Epoxidharzes muss dabei Triglycidylisocyanurat sein, das als Vernetzungsmittel für das Epoxidharz und das Polyesterharz wirkt.

Die FR-A 2 365 614 offenbart Pulverlacke für matte Ueberzüge, welche mindestens ein gesättigtes Harz, mindestens einen Härter für das Harz sowie ein organisches Metallsalz eines mindestens zweiwertigen Metalls (z. B. Calciumstearat) enthalten. Bevorzugte Harze sind Epoxidharze oder hydroxylgruppenendständige Polyester und als Härter für die Harze werden Anhydridverbindungen, Säuren oder verkappte Isocyanate erwähnt.

Die für viele Anwendungen erwünschte Herstellung von matten Ueberzügen ist für Pulverlack-Systeme noch nicht zufriedenstellend gelöst worden. Zusätze, die in lösungsmittelhaltigen Lacken häufig verwendet werden, wie z. B. Kieselsäure, Talk, Glimmer, Kreide oder Metallseifen, ergeben bei Pulverlacken nicht den erwünschten Effekt : entweder ist die Reduktion des Glanzgrades ungenügend, oder es muss bei erhöhtem Mattierungseffekt eine Verschlechterung einer oder mehrerer anderer Lackeigenschaften, z. B. der mechanischen Eigenschaften, der thermischen Beständigkeit und/oder der Haftfestigkeit in Kauf genommen werden. Im Gegensatz dazu erlaubt die vorliegende Erfindung eine starke Glanzreduktion ohne wesentliche Beeinträchtigung der übrigen Lackeigenschaften. Dies wird durch die gleichzeitige Verwendung von Wachsen oder wachsartigen Substanzen und von Metallverbindungen als Mattierungsmittel ermöglicht. Diese Tatsache ist umso überraschender, als z. B. gemäss der US Patentschrift 3,872,040 und der JP Kokai 81/98216 durch Zugabe von Wachsen allein, Pulverlack-Ueberzüge mit erhöhtem Glanz erhalten werden.

Gegenstand der vorliegenden Erfindung ist ein Pulverlack enthaltend
(a) ein Epoxidharz,
(b) einen gesättigten Polyester mit endständigen Carboxylgruppen,
(c) ein Wachs oder eine wachsartige Substanz und
(d) ein Metallsalz bzw. -komplex einer organischen Verbindung, wobei das Metall aus der Gruppe Mg, Ca, Sr, Ba, Zn, Al, Sn und Sb ausgewählt ist.

Als Komponenten (a) bis (d) können je einheitliche Verbindungen oder Gemische verschiedener Verbindungen verwendet werden.

Als Komponente (a) können die üblichen, für Pulverbeschichtungen geeigneten Epoxidharze verwendet werden. Solche Verbindungen sind beispielsweise in der DE-OS 28 38 841 beschrieben. Der Inhalt dieser Offenlegungsschrift ist somit Bestandteil vorliegender Erfindung.

Die verwendeten Harze haben vorzugsweise einen Epoxidgehalt von 0,5 bis 12 Aequivalenten pro kg. Die bevorzugten Epoxidharze sind bei Zimmertemperatur fest und können, falls erforderlich, durch Umsetzung mit z. B. einem zweiwertigen Phenol vorverlängert werden.

Besonders bevorzugt sind Epoxidharze, die im Durchschnitt mehr als eine Epoxidgruppe im Molekül enthalten und Polyglycidylderivate von Aromaten oder Heteroaromaten sind.

Besonders bevorzugte Harze sind gegebenenfalls vorverlängerte Polyglycidylether von 2,2-Bis(4′-hydroxyphenyl)propan (Bisphenol A), 2,2-Bis(3′,5′-dibromo-4′-hydroxyphenyl)propan (Tetrabrombisphenol A), von Bis(4-hydroxyphenyl)methan (Bisphenol F) und von Novolaken, Polyglycidylderivate von 4,4′-Diaminodiphenylmethan, von 4,4′-Diaminodiphenylsulfon sowie von 2,4,6-Trihydroxy-1,3,5-triazin (Cyanursäure), wie z. B. Triglycidylisocyanurat.

Als Komponente (b) geeignete gesättigte Polyester mit endständigen Carboxylgruppen haben vorzugsweise im Durchschnitt mehr als zwei Carboxylgruppen pro Molekül, eine Säurezahl von 15 bis 100 und ein durchschnittliches Molekulargewicht von 500 bis 10 000. Die verwendeten Polyester sind vorzugsweise bei Zimmertemperatur fest und haben eine Glasumwandlungstemperatur von 40 bis 80 °C.

Solche Polyester sind z. B. in der US Patentschrift 3,397,254 und in der DE Offenlegungsschrift 21 63 962 beschrieben. Sie können z. B. durch Umsetzung von Polyestern mit endständigen Hydroxygruppen mit Tricarbonsäureanhydriden oder Tetracarbonsäuredianhydriden erhalten werden. Die Polyester mit endständigen Hydroxygruppen ihrerseits sind Reaktionsprodukte von Polyolen mit Dicarbonsäuren oder -säureanhydriden und haben zweckmässig einen durchschnittlichen Polymerisationsgrad von wenigstens 3, im allgemeinen von 3 bis 25, vorzugsweise von 5 bis 12.

Geeignete Polyole sind z. B. Ethylenglykol, Glycerin, 1,4-Butandiol, Neopentandiol und Cyclohexandiol.

2

Geeignete Dicarbonsäuren sind beispielsweise Isophthalsäure, Terephthalsäure, Cyclohexandicarbonsäure, Bernsteinsäure, Glutarsäure, Adipinsäure, Pimelinsäure, Suberinsäure, Azelainsäure oder Sebacinsäure.

Geeignete Tricarbonsäureanhydride sind z. B. Anhydride von aliphatischen Tricarbonsäuren, wie Tricarballylsäure (1,2,3-Propantricarbonsäure), von aromatischen Tricarbonsäuren, wie Trimellitsäure (Benzol-1,2,4-tricarbonsäure) und Hemimellitsäure (Benzol-1,2,3-tricarbonsäure), oder von cycloaliphatischen Tricarbonsäuren, wie 6-Methyl-cyclohex-4-en-1,2,3-tricarbonsäure. Geeignete Tetracarbonsäuredianhydride sind z. B. Pyromellitsäuredianhydrid oder Benzophenon-3,3′, 4,4′-tetracarbonsäuredianhydrid.

Das Epoxidharz (a) und der Polyester (b) werden vorzugsweise so gewählt, dass die Summe der Epoxidäquivalente und der Carboxyläquivalente zwischen 0,8 und 2,5 pro kg des Bindemittels (a) + (b) beträgt. Dabei liegt das Verhältnis der Carboxyläquivalente des Polyesters (b) zu den Epoxidäquivalenten des Epoxidharzes (a) vorzugsweise zwischen 0,5 und 1,5.

Im Handel ist eine grosse Anzahl von Wachsen und wachsartigen Substanzen erhältlich. Wie schon vorher erwähnt, beschreibt die US Patentschrift 3,872,040 eine Vielfalt von Wachsen, die als Bestandteil von Pulverlacken eine Glanzerhöhung der Ueberzüge bewirken. Prinzipiell können erfindungsgemäss als Komponente (c) die gleichen Wachse in Kombination mit den Metallverbindungen (d) zum Mattieren von Pulverlack-Ueberzügen verwendet werden. Somit ist der Inhalt der US Patentschrift 3,872,040 Bestandteil vorliegender Erfindung.

Das erfindungsgemäss zu verwendende Wachs oder die wachsartige Substanz (c) hat vorzugsweise einen Schmelzpunkt von $> 50\,°C$, besonders bevorzugt von $> 100\,°C$. Es können natürliche Wachse pflanzlichen, tierischen oder mineralischen Ursprungs oder auch synthetische Wachse verwendet werden.

Als natürliche Wachse werden vorzugsweise Montanwachs, Carnaubawachs, Bienenwachs, Schellackwachs, Paraffinwachs, Ceresin oder Japanwachs verwendet.

Bevorzugte synthetische Wachse sind Reaktionsprodukte von langkettigen Alkoholen (etwa $C_{16}$-$C_{36}$), wie z. B. Cetylalkohol, Palmitylalkohol oder Stearylalkohol, mit Säuren, wie Stearinsäure, Palmitinsäure oder Myristinsäure, fener Glyceride, Glykolester oder Polyethylenglykolester von Fettsäuren, wie z. B. von Stearinsäure, synthetisches Bienenwachs, aliphatische Aminwachse erhalten z. B. durch Reaktion von hydrogeniertem Rizinusöl mit Monoethanolamin, sowie hochmolekulare aliphatische Amide. Besonders bevorzugt als Komponente (c) sind Polyamidwachse, fluorierte Polyolefinwachse, Fettsäureesterwachse, Bienenwachs oder insbesondere unsubstituierte Polyolefinwachse.

Die erfindungsgemäss als Komponente (d) zu verwendenden Metallsalze bzw. -komplexe organischer Verbindungen enthalten vorzugsweise Magnesium, Calcium, Aluminium und insbesondere Zink.

Den organischen Teil der Komponente (d) bilden vorzugsweise $C_6$-$C_{32}$-Monocarbonsäuren oder Derivate solcher Säuren, $C_6$-$C_{13}$-Phenole bzw. Naphthole, $C_5$-$C_{12}$-1,3-Diketone oder insbesondere schwefelhaltige Verbindungen.

Bei den Monocarbonsäuren handelt es sich vorzugsweise um natürliche Fettsäuren die gesättigt, einfach- oder mehrfach ungesättigt und/oder substituiert sein können. Als gesättigte Fettsäuren kommen beispielsweise Caprylsäure, Caprinsäure, Laurinsäure, Myristinsäure, Palmitinsäure und insbesondere Stearinsäure in Frage. Als ungesättigte Säuren kommen z. B. Palmitoleinsäure (8-Hexadecensäure), Oelsäure (9-Octadecensäure), Linolsäure (9,12-Octadecadiensäure) und Linolensäure (9,12,15-Octadecatriensäure) in Frage. Substituierte Fettsäuren können durch Alkyl-, Cycloalkyl-, Hydroxy- und Ketogruppen substituiert sein.

Als Fettsäurederivate eignen sich z. B. Di- und Oligomere, insbesondere von ungesättigten Fettsäuren, d. h. Verbindungen mit zwei oder mehreren Carboxylgruppen pro Molekül.

Die $C_6$-$C_{13}$-Phenole bzw. Naphthole können im Ring z. B. durch $C_1$-$C_3$-Alkylgruppen, durch fluorierte $C_1$-$C_3$-Alkylgruppen, durch Halogenatome oder durch Nitrogruppen substituiert sein.

Als $C_5$-$C_{12}$-1,3-Diketon kann beispielsweise Acetylaceton verwendet werden.

Als schwefelhaltige Verbindungen werden Thiole, Thiophenole, Disulfide oder Derivate von Thioharnstoff bzw. von Thiocarbaminsäure bevorzugt. Als Beispiele für schwefelhaltige Verbindungen können N,N-Dimethyldithiocarbaminsäure, Bis(N,N-dimethylthiocarbamoyl) disulfid, Dibenzyldisulfid, N,N′-Diisopropylthioharnstoff, 2-Benzthiazolyl-N,N-diethylthiocarbamoylsulfid, 2-Benz-thiazolthiol (2-Mercaptobenzthiazol), tert-Dodecylmercaptan (Gemisch aus 2,4,4,6,6-Pentamethylheptan-2-thiol und 2,2,4,6,6-Pentamethylheptan-4-thiol) und Pentachlorthiophenol erwähnt werden.

Bevorzugte Metallverbindungen (d) sind Aluminium- oder Magnesiumstearat, Aluminium- oder Zink-Acetylacetonat, Zink-Methacrylat oder -Arachinat, Zink-Pentachlorthiophenolat oder insbesondere Zink-2-Benzthiazolthiolat (Zink-Mercaptobenzthiazol).

Erfindungsgemäss wird die Gesamtmenge des Wachses oder der wachsartigen Substanz (c) und der Metallverbindung (d) vorzugsweise so gewählt, dass sie höchstens 20 Gew.% und insbesondere 3 bis 10 Gew.%, bezogen auf das Bindemittel (a) + (b), beträgt.

Das Gewichsverhältnis der Komponenten (c) und (d) ist vorzugsweise grösser als 1, insbesondere grösser als 2 und besonders bevorzugt grösser als 5.

Gewünschtenfalls können den Pulverlacken noch weitere in der Lackindustrie übliche Zusätze, wie beispielsweise Lichtschutzmittel, Farbstoffe und insbesondere Entgasungsmittel, Verlaufsmittel und/oder Pigmente beigegeben werden.

Verlaufsmittel sind z. B. Polyvinylacetale, wie Polyvinylbutyral (« Movital » B 30 H® der HOECHST), Polyethylenglykol, Polyvinylpyrrolidon, Glycerin, Acryl-Mischpolymerisate, wie « Modaflow »® oder « Acrylron » MFP® der MONSANTO bzw. der PROTEX.

Als Entgasungsmittel wird vorzugsweise Benzoin eingesetzt.

Die neuen Pulverlacke können durch einfaches Mischen der Bestandteile, z. B. in einer Kugelmühle, hergestellt werden. Eine andere Möglichkeit der Herstellung besteht darin, dass man die Bestandteile zusammen schmilzt, vorzugsweise in einer Spritzmaschine, wie z. B. in einem Buss-Kokneter, und dann die abgekühlte Masse zerkleinert. Die Mischungen weisen vorzugsweise eine Partikelgrösse im Bereich von 0,015 bis 500 $\mu$m, und insbesondere von 10-75 $\mu$m, auf.

Gegenstand der Erfindung ist auch die Verwendung des erfindungsgemässen Pulverlacks zur Herstellung matter Ueberzüge auf Oberflächen, insbesondere von Metallen, wie z. B. Aluminium oder Stahl.

Dabei wird der Pulverlack auf den zu beschichtenden Gegenstand appliziert und auf mindestens 120 °C, vorzugsweise auf 150 bis 250 °C, erhitzt, um das Harz auszuhärten.

Matte Ueberzüge werden durch Härtung des erfindungsgemässen Pulverlackes erhalten.

Ein weiterer Gegenstand der Erfindung ist die Verwendung eines Stoffgemisches bestehend aus

(c) einem Wachs oder einer wachsartigen Substanz und

(d) einem Metallsalz bzw. -komplex einer organischen Verbindung,

wobei das Metall aus der Gruppe Mg, Ca, Sr, Ba, Zn, Al, Sn und Sb ausgewählt ist, als Mattierungsmittel für Epoxidharz-haltige Pulverlacke, insbesondere solche, die mit Polyestern mit endständigen Carboxylgruppen gehärtet werden.

In den folgenden Beispielen werden einige erfindungsgemässe Pulverlacke, deren Anwendungen und Eigenschaften illustriert.

## Anwendungsbeispiele

### Beispiel 1

Zur Herstellung eines Pulverlackes werden in einem Rhönradmischer (Freifallmischer) folgende Komponenten während 15 min gemischt : 930 g eines für die Pulverlackherstellung handelsüblichen carboxylendständigen gesättigten Polyesters mit einer Säurezahl, SZ = 33 und einer Glasumwandlungstemperatur (DSC) von 58 °C (Uralac P 3900® der Firma Scado, Zwolle), 70 g Triglycidylisocyanurat, mit einem Epoxidgehalt von 9,4 Äquiv./kg, 2 g Benzoin, 10 g Modaflow-Pulver II® (Verlaufsmittel der Firma Monsanto auf der Basis von Poly-(2-hydroxyethyl) acrylat adsorbiert auf Silikagel) und 500 g TiO$_2$. Das Gemisch wird bei 80-100 °C in einem Extruder homogenisiert, gekühlt und bis zu einer mittleren Korngrösse von ca. 50 $\mu$m gemahlen. Anschliessend wird das Pulver mit einer elektrostatischen Pulverspritzpistole auf ein gereinigtes Aluminiumblech aufgetragen und während 15 min bei 190 °C gehärtet. Es entsteht ein Lackfilm von ca. 60 $\mu$m Dicke mit den in der Tabelle 1 angegebenen Eigenschaften.

### Beispiel 2

Es wird genau gleich verfahren wie im Beispiel 1, jedoch werden zu der Mischung im Rhönradmischer noch zusätzlich 30 g eines Polyolefinwachses mit der allgemeinen chemischen Formel $C_nH_{2n+2}$ und einem Schmelzpunkt von ca. 140 °C (Deuteronwachs MPO® der Firma Schöner, Bremen) und 5 g Zn-2-Benzthiazolthiolat gegeben.

### Beispiel 3

In einem Rhönradmischer werden 500 g eines für Pulverlacke üblichen carboxylenständigen gesättigten Polyesters mit einer Säurezahl, SZ = 79 und einer Glasumwandlungstemperatur (DSC) von ca. 55 °C (Uralac P 2998® der Firma Scado, Zwolle), 500 g eines Bisphenol-A Epoxidharzes mit einem Epoxidgehalt von 1,16 Äquiv./kg und einem Schmelzpunkt (nach Mettler) von 102 °C, 10 g Modaflow-Pulver II®, 2 g Benzoin und 500 g TiO$_2$ gemischt und in gleicher Weise wie in Beispiel 1 zu einem Lackfilm weiterverarbeitet.

### Beispiel 4

Es wird in gleicher Weise verfahren wie in Beispiel 3, jedoch werden zu der Mischung noch zusätzlich 10 g Zn-2-Benzthiazolthiolat und 73 g des Wachses aus Beispiel 2 gegeben.

### Beispiel 5

Es wird in gleicher Weise verfahren wie in Beispiel 3, jedoch werden zu der Mischung noch zusätzlich 10 g Zink-Acetylacetonat und 73 g des Wachses aus Beispiel 2 gegeben.

Die Eigenschaften der Pulverlacksysteme aus den Beispielen 1-5 sind in der Tabelle 1 dargestellt. Pulverlacke aus den Beispielen 1 und 3, die kein erfindungsgemässes Mattierungsmittel enthalten, ergeben einen Lackfilm mit 100 % Glanz. Die mit den erfindungsgemässen Pulverlacksystemen 2, 4 und 5 hergestellten Lackfilme zeichnen sich andererseits durch den gewünschten reduzierten Glanz aus und besitzen immer noch die guten mechanischen Eigenschaften der Lackfilme, die ohne irgendwelche Zusätze hergestellt wurden.

(Siehe Tabelle 1 Seite 6 f.)

Tabelle 1

| Beispiel Nr. | Metallverbindung (%)[a] | Wachs (%)[a] | Glanz (%) | Schlagverformung rückseitig [b] (cm•kg) | Erichsentiefung (DIN 53156) (mm) |
|---|---|---|---|---|---|
| 1 | – | – | 100 | 160 | 10 |
| 2 | Zn-2-Benzthiazolthiolat 0,5 | PO 3 | 60 | 160 | 9,5 |
| 3 | – | – | 100 | 160 | 10 |
| 4 | Zn-2-Benzthiazolthiolat 1 | PO 7,3 | 60 | 160 | 7,6 |
| 5 | Zn-Acetylacetonat 1 | PO 7,3 | 65 | 160 | 7,0 |

[a] Gew.%, bezogen auf die Gesamtmenge des Bindemittels (Epoxidharz + Polyester)

PO : Polyolefinwachs der allgemeinen Formel $C_nH_{2n+2}$, Smp. ca. 140 °C (Deuteronwachs MPO* der Firma Schöner, Bremen)

[b] Auf das beschichtete Aluminiumblech wird von hinten aus bestimmter Höhe ein Stempel mit einem bekannten Gewicht fallengelassen. Der erhaltene Wert, Höhe mal Gewicht, zeigt den grössten Schlag an, bei dem die Beschichtung noch unbeschädigt bleibt.

## Beispiele 6-10

Es wird in gleicher Weise verfahren wie im Beispiel 3, jedoch werden der Mischung noch zusätzlich beigegeben :

6) 10 g Al-Acetylacetonat und 73 g des Wachses aus Beispiel 2 ;
7) 10 g Al-Stearat und 73 g des Wachses aus Beispiel 2 ;
8) 10 g Mg-Stearat und 73 g des Wachses aus Beispiel 2 ;
9) 10 g Zn-2-Benzthiazolthiolat und 73 g eines Polytetrafluorethylenwachses mit einem Schmelzpunkt von > 315 °C (Polymist F-5A® der Allied Chemical) ;
10) 10 g Zn-2-Benzthiazolthiolat und 73 g eines Polyamidwachses mit einem Schmelzpunkt von > 250 °C (Lancowachs HM 1666® der Georg Langer AG, Bremen).

Pulverlacke aus den Beispielen 6-10 ergeben Ueberzüge mit durchwegs gutem bis sehr gutem Mattierungseffekt (zwischen 60 und 90 % Glanz).

Die in den Beispielen angegebenen Glanzwerte werden durch Vergleich mit der « Glanzskala nach Boller » der Fa. Erichsen GmbH ermittelt. Es handelt sich um Mittelwerte aus den Messungen von drei Personen.

Die photometrische Glanzbestimmung mit einem Reflektometer liefert wegen der unterschiedlichen Oberflächenstruktur der nach den obigen Beispielen erhaltenen Pulverlack-Beschichtungen nicht (direkt) vergleichbare Werte. Gesamthaft liegen aber die photometrischen Werte wesentlich tiefer als die Bollerwerte, wie für Beispiel 2 gezeigt wird.

| Beispiel | Bollerwert | Photometrischer Wert bei Reflexionswinkel | | |
|---|---|---|---|---|
| | | 20° | 60° | 85° |
| 2 | 60 | 6,9 | 32 | 73 |

## Beispiele 11-12

In der bereits beschriebenen Weise wird ein Pulverlack-Film hergestellt. Das Lackpulver ist aus folgenden Komponenten aufgebaut :

495 g eines Bisphenol A-Epoxidharzes mit einem Epoxigehalt von 1,35 Aequiv./kg und einem Erweichungspunkt (DIN 51 920) von 100 °C
500 g des Polyesters aus Beispiel 3
5 g Acrylron MFP (Verlaufsmittel der Fa. PROTEX, F)
2 g Benzoin
500 g $TiO_2$
10 g Zn-2-Benzthiazolthiolat (Zn-Mercaptobenzthiazol)
73 g « Wachs »

## Beispiel 11

« Wachs » = Bärolub LT 100®, ein Fettsäureester der Fa. Bärlocher, München mit einem Schmelzpunkt von 40 °C.

## Beispiel 12

« Wachs » = Bienenwachs.

## Beispiele 13-15

In der bereits beschriebenen Weise wird ein Pulverlack-Film hergestellt. Das Lackpulver ist aus folgenden Komponenten aufgebaut :

495 g eines Bisphenol A-Epoxidharzes mit einem Epoxidgehalt von 1,35 Aequiv./kg und einem Erweichungspunkt (DIN 51 920) von 100 °C

500 g des Polyesters aus Beispiel 3
5 g Acrylron MFP (Verlaufsmittel der Fa. PROTEX, F)
2 g Benzoin
500 g TiO$_2$
73 g Polyolefinwachs (Deuteron MPO$^\circledR$ der Fa. Schöner, Bremen)
10 g « Additiv »

Beispiel 13

« Additiv » = Zn-Methacrylat

Beispiel 14

« Additiv » = Zn-Arachinat

Beispiel 15

« Additiv » = Zn-Pentachlorthiophenolat (« Renacit 4 » der Fa. Bayer).

Die Eigenschaften der Pulverlacksysteme sind in der Tabelle 2 dargestellt.

(Siehe Tabelle 2 Seite 9 f.)

Tabelle 2

| Beispiel Nr. | Metallverbindung 1 Gew.% bezogen auf die Gesamtmenge des Bindemittels | Wachs 7,3 Gew.%, bezogen auf die Gesamtmenge des Bindemittels | Glanz (%) | Schlag-verformung rückseitig (cm·kg) | Erichsentiefung (DIN 53 156) (mm) |
|---|---|---|---|---|---|
| 11 | Zn-Mercaptobenzthiazol | Bärlub LT 100® | 60 | 120 | 8,0 |
| 12 | Zn-Mercaptobenzthiazol | Bienenwachs | 55 | 100 | 5,0 |
| 13 | Zn-Methacrylat | Deuteronwachs MPO® | 70 | 160 | 9,5 |
| 14 | Zn-Arachinat | Deuteronwachs MPO® | 90 | 160 | 8,5 |
| 15 | Zn-Pentachlorthiophenolat | Deuteronwachs MPO® | 65 | 140 | 8,2 |

**0 165 207**

**Patentansprüche**

1. Pulverlack enthaltend
   (a) ein Epoxidharz,
   (b) einen gesättigten Polyester mit endständigen Carboxylgruppen,
   (c) ein Wachs oder eine wachsartige Substanz und
   (d) ein Metallsalz bzw. -komplex einer organischen Verbindung, wobei das Metall aus der Gruppe Mg, Ca, Sr, Ba, Zn, Al, Sn und Sb ausgewählt ist.

2. Pulverlack nach Anspruch 1, worin die Komponente (b) im Durchschnitt mehr als zwei Carboxylgruppen pro Molekül, eine Säurezahl von 15 bis 100 und ein durchschnittliches Molekulargewicht von 500 bis 10 000 hat.

3. Pulverlack nach Anspruch 1, worin die Summe der Epoxidäquivalente und der Carboxyläquivalente zwischen 0,8 und 2,5 pro kg des Bindemittels (a) + (b) beträgt.

4. Pulverlack nach Anspruch 1, worin die Mengen der Komponenten (a) und (b) so gewählt sind, dass das Verhältnis der Carboxyläquivalente des Polyesters (b) zu den Epoxidäquivalenten des Epoxidharzes (a) zwischen 0,5 und 1,5 liegt.

5. Pulverlack nach Anspruch 1, worin die Komponente (c) einen Schmelzpunkt von > 50 °C, vorzugsweise von > 100 °C hat.

6. Pulverlack nach Anspruch 5, worin die Komponente (c) ein Polyamidwachs, ein fluoriertes Polyolefinwachs, ein Fettsäureesterwachs, Bienenwachs oder insbesondere ein unsubstituiertes Polyolefinwachs ist.

7. Pulverlack nach Anspruch 1, worin das Metall der Komponente (d) Mg, Ca, Al und insbesondere Zn ist.

8. Pulverlack nach Anspruch 1, worin die Komponente (d) ein Metallsalz bzw. -komplex einer $C_6$-$C_{32}$-Monocarbonsäure oder eines Derivates einer solchen Säure, eines $C_6$-$C_{13}$-Phenols bzw. Naphthols, eines $C_5$-$C_{12}$-1,3-Diketons oder insbesondere einer schwefelhaltigen Verbindung ist.

9. Pulverlack nach Anspruch 1, worin die Komponente (d) Aluminium- oder Magnesiumstearat, Aluminium- oder Zink-Acetylacetonat, Zink-Methacrylat oder -Arachinat, Zink-Pentachlorthiophenolat oder insbesondere Zink-2-Benzthiazolthiolat (Zink-Mercaptobenzthiazol) ist.

10. Pulverlack nach Anspruch 1, worin die Gesamtmenge der Komponenten (c) und (d) höchstens 20 Gew.% und insbesondere 3-10 Gew.%, bezogen auf das Bindemittel (a) + (b), beträgt.

11. Pulverlack nach Anspruch 1, der zusätzlich noch ein Entgasungsmittel, ein Verlaufsmittel und/oder ein Pigment enthält.

12. Verwendung des Pulverlacks nach Anspruch 1 zur Herstellung matter Ueberzüge auf Oberflächen, insbesondere von Metallen.

13. Verwendung eines Stoffgemisches bestehend aus
   (c) einem Wachs oder einer wachsartigen Substanz und
   (d) einem Metallsalz bzw. -komplex einer organischen Verbindung,
wobei das Metall aus der Gruppe Mg, Ca, Sr, Ba, Zn, Al, Sn und Sb ausgewählt ist, als Mattierungsmittel für Epoxidharz-haltige Pulverlacke.


**Claims**

1. A powder coating composition comprising
   (a) an epoxy resin,
   (b) a saturated carboxyl-terminated polyester,
   (c) a wax or wax-like substance, and
   (d) a metal salt or metal complex of an organic compound, wherein the metal is selected from the group Mg, Ca, Sr, Ba, Zn, Al, Sn and Sb.

2. A powder coating composition according to Claim 1, wherein component (b) has on average more than two carboxyl groups per molecule, an acid number of 15 to 100 and an average molecular weight of 500 to 10,000.

3. A powder coating composition according to Claim 1, wherein the sum of the epoxide equivalents and the carboxyl equivalents is from 0.8 to 2.5 per kg of the binder (a) + (b).

4. A powder coating composition according to Claim 1, wherein the amounts of components (a) and (b) are chosen such that the ratio of the carboxyl equivalents of the polyester (b) to the epoxide equivalents of the epoxy resin (a) is from 0.5 to 1.5.

5. A powder coating composition according to Claim 1, wherein component (c) has a melting point of > 50 °C, preferably > 100 °C.

6. A powder coating composition according to Claim 5, wherein component (c) is a polyamide wax, a fluorinated polyolefin wax, a fatty acid ester wax, beeswax or, in particular, an unsubstituted polyolefin wax.

7. A powder coating composition according to Claim 1, wherein the metal of component (d) is Mg, Ca, Al and in particular Zn.

8. A powder coating composition according to Claim 1, wherein component (d) is a metal salt or metal complex of a $C_6$-$C_{32}$-monocarboxylic acid or of a derivative of such an acid, of a $C_6$-$C_{13}$-phenol or naphthol, of a $C_5$-$C_{12}$-1,3-diketone or, in particular, of a sulfur-containing compound.

9. A powder coating composition according to Claim 1, wherein component (d) is aluminium stearate or magnesium stearate, aluminium acetylacetonate or zinc acetylacetonate, zinc methacrylate or zinc arachinate, zinc pentachlorothiophenolate or, in particular, zinc 2-benzothiazolethiolate (zinc mercaptobenzothiazole).

10. A powder coating composition according to Claim 1, wherein the total amount of components (c) and (d) is not more than 20 % by weight, and is, in particular, from 3 to 10 % by weight, based on the binder (a) + (b).

11. A powder coating composition according to Claim 1, which additionally contains a deaerating agent, a flow control agent and/or a pigment.

12. Use of the powder coating composition according to Claim 1 for the preparation of matt coatings on surfaces, in particular of metals.

13. Use of a composition of matter comprising
(c) a wax or wax-like substance, and
(d) a metal salt or metal complex of an organic compound,
wherein the metal is selected from the group Mg, Ca, Sr, Ba, Zn, Al, Sn and Sb, as a matting agent for epoxy resin-containing powder coating compositions.


**Revendications**

1. Peinture en poudre qui contient :
(a) une résine époxydique,
(b) un polyester saturé à radicaux carboxy terminaux,
(c) une cire ou une substance analogue à une cire et
(d) un sel ou complexe métallique qui dérive d'un composé organique et dont le métal est pris dans l'ensemble constitué par Mg, Ca, Sr, Ba, Zn, Al, Sn et Sb.

2. Peinture en poudre selon la revendication 1 dans laquelle la composante (b) contient en moyenne plus de deux radicaux carboxy par molécule, a un indice d'acide de 15 à 100 et a une masse moléculaire moyenne de 500 à 10 000.

3. Peinture en poudre selon la revendication 1 dans laquelle la somme des nombres des équivalents d'époxy et des équivalents de carboxy est comprise entre 0,8 et 2,5 par kilogramme du liant (a) + (b).

4. Peinture en poudre selon la revendication 1 dans laquelle les quantités des composantes (a) et (b) sont choisies de telle façon que le rapport des équivalents de carboxy du polyester (b) aux équivalents d'époxy de la résine époxydique (a) est compris entre 0,5 et 1,5.

5. Peinture en poudre selon la revendication 1 dans laquelle la composante (c) a un point de fusion supérieur à 50 °C, de préférence supérieur à 100 °C.

6. Peinture en poudre selon la revendication 5 dans laquelle la composante (c) est une cire de polyamide, une cire de polyoléfine fluorée, une cire d'ester d'acide gras, la cire d'abeille ou, plus particulièrement, une cire de polyoléfine non substituée.

7. Peinture en poudre selon la revendication 1 dans laquelle le métal de la composante (d) est Mg, Ca, Al ou, mieux, Zn.

8. Peinture en poudre selon la revendication 1 dans laquelle la composante (d) est un sel ou complexe métallique dérivant d'un acide monocarboxylique en $C_6$-$C_{32}$ ou d'un dérivé d'un tel acide, d'un phénol ou naphtol en $C_6$-$C_{13}$, d'une dicétone-1,3 en $C_5$-$C_{12}$ ou, plus spécialement, d'un composé sulfuré.

9. Peinture en poudre selon la revendication 1 dans laquelle la composante (d) est le stéarate d'aluminium ou de magnésium, l'acétylacétonate d'aluminium ou de zinc, le méthacrylate ou l'arachidate de zinc, le pentachloro-thiophénolate de zinc ou, plus particulièrement, le benzothiazolethiolate-2 de zinc (zinc-mercaptobenzothiazole).

10. Peinture en poudre selon la revendication 1 dans laquelle la quantité totale des composantes (c) et (d) est d'au plus 20 % en poids ou, mieux, de 3 à 10 % en poids, par rapport au liant (a) + (b).

11. Peinture en poudre selon la revendication 1 qui contient, en plus, un agent de dégazage, un agent de nivellement et/ou un pigment.

12. Application de la peinture en poudre selon la revendication 1 pour la formation de revêtements mats sur des surfaces, plus spécialement sur des métaux.

13. Application d'un mélange constitué :
(c) d'une cire ou d'une substance analogue à une cire et
(d) d'un sel ou complexe métallique qui dérive d'un composé organique et dont le métal est pris dans l'ensemble constitué par Mg, Ca, Sr, Ba, Zn, Al, Sn et Sb,
comme agent de matité pour des peintures en poudre contenant des résines époxydiques.